Europäisches Patentamt

European Patent Office

Office européen des brevets

(11) Veröffentlichungsnummer: **0 100 783**
A1

# (12) EUROPÄISCHE PATENTANMELDUNG

(21) Anmeldenummer: **82107363.2**

(22) Anmeldetag: **13.08.82**

(51) Int. Cl.³: **B 01 J 19/00**
C 01 B 7/19, C 01 F 11/46

(43) Veröffentlichungstag der Anmeldung:
22.02.84 Patentblatt 84/8

(84) Benannte Vertragsstaaten:
DE FR GB IT

(71) Anmelder: List, Heinz
Vogelmattstrasse 15
CH-4133 Pratteln 2(CH)

(72) Erfinder: List, Heinz
Vogelmattstrasse 15
CH-4133 Pratteln 2(CH)

(74) Vertreter: Quehl, Horst Max, Dipl.-Ing.
c/o EGLI PATENTANWAELTE Horneggstrasse 4
CH-8008 Zürich(CH)

(54) **Verfahren zur Durchführung von endothermen Prozessen.**

(57) Zur Durchführung von endothermen Prozessen in Rührbehältern bei höheren Temperaturen, bei denen die Produkte normalerweise die Apparatewerkstoffe stark korrodierend angreifen, wird die Reaktionswärme nicht mehr durch die beheizte Apparatewand von aussen zugeführt, sondern durch Vorheizen der Reaktionskomponenten und/oder eine exotherme Vorreaktion mindestens einer Reaktionskomponente. Dies ermöglicht die Kühlung der Apparatewand auf eine Temperatur, bei der die Korrosion wirtschaftlich tragbar ist. Die endotherme Reaktion von Flussspat und Schwefelsäure zu Flussäure und Gips kann nach dem Verfahren wirtschaftlicher durchgeführt werden.

EP 0 100 783 A1

- 1 -

Verfahren zur Durchführung von endothermen Prozessen

Die vorliegende Erfindung betrifft ein Verfahren gemäss dem Oberbegriff des Anspruchs 1.

Bei vielen Verfahren zur Durchführung von chemischen oder thermischen Verfahren mit endothermen Reaktionen ist man gezwungen, bei verhältnismässig geringen Produkttemperaturen zu arbeiten, da die Korrosionsrate des Apparatewerkstoffes bei höheren Temperaturen ausserordentlich stark ansteigt. Man war daher bisher gezwungen, durch entsprechende Dosierung der Apparateheizung ein bestimmtes Temperaturniveau nicht zu überschreiten. Bei dieser Arbeitsweise kann auch nur mit einer geringen Temperaturdifferenz zwischen Heizmittel und Produkt gearbeitet werden, um die für die Korrosion verantwortliche Temperatur des Werkstoffes an der Berührungsstelle mit dem Produkt möglichst niedrig zu halten. Die durch die niedrige Temperaturdifferenz bestimmte Wärmemenge für die endotherme Reaktion ist entsprechend klein und ergibt nur einen langsamen Fortschritt der Reaktion. Diese Nachteile werden erfindungsgemäss aufgrund der Merkmale des kennzeichnenden Teils des Anspruchs 1 gelöst.

Die vorliegende Erfindung geht somit davon aus, dass die notwendige Wärme für eine endotherme Reaktion nicht durch die Apparatewand zugeführt wird, sondern durch Vorheizen und/oder eine Vorreaktion von Reaktionskomponenten. Hierdurch wird eine entsprechende Kühlung des Reaktionsapparates möglich, so dass die innere Apparatewand eine bestimmte, für die Korrosion noch tragbare Temperatur nicht überschreitet.

Ein gutes Beispiel bietet die endotherme Reaktion von Flussspat ($CaF_2$) und Schwefelsäure ($H_2SO_4$) zu Flussäure (HF) und Gips ($CaSO_4$). Dieser Prozess wird heute zumeist aufgeteilt in eine Vorreaktion, die in einem Vorreaktor stattfindet und einen zweiten Reaktionsschritt. Die Vorreatkion muss hierbei wegen des starken Korrosionsangriffs in Apparaten aus besonderen, z.B. Nickel-Chrom-Molybdän-Werkstoffen durchgeführt werden, während der zweite und restliche Teil der Reaktion in normalen Stahlapparaten durchgeführt werden kann.

Der Vorreaktor selbst war bisher nur von aussen mittels Dampf oder einem anderen Wärmeübertragungsmittel beheizt. Der mit höherer Temperatur potentiell stärkere Korrosionsangriff z.B. durch die zugeführte Schwefelsäure machte bisher eine Begrenzung der Reaktionstemperatur auf maximal 100°C erforderlich. Auch die Heiztemperatur musste aus den schon erwähnten Gründen auf 120 - 130°C begrenzt werden, wobei ein Teil der Reaktionswärme auch durch das Aufheizen der Schwefelsäure auf 100°C eingebracht wurde. Diese Temperaturbegrenzungen erfordern einen verhältnismässig grossen Apparat, um die Reaktion auf einen Umsatz von nur 25 % zu bringen. Erwünscht im im Vorreaktor jedoch ein Umsatz von ca. 35 %, um das Material in granulierter Form in die zweite Reaktionsstufe einzutragen. Die Eintragung dieses Granulats verhindert die Bildung von grösseren Agglomeraten und beschleunigt die Endreaktion.

Erfindungsgemäss wird die Reaktionswärme soweit als möglich durch Vorheizung von Flussspat und Schwefelsäure eingebracht. Weitere Reaktionswärme kann in einfacher Weise im Apparat dadurch erzeugt werden, dass man statt Schwefelsäure Oleum und Wasser zuführt, die wiederum Schwefelsäure bilden. Diese Nebenreaktion setzt sehr grosse Wärmemengen für die eigentliche endotherme Reaktion frei. Der $SO_3$-Gehalt des Oleums muss hierbei so reguliert werden, dass einmal die erforderliche stöchiometrische Schwefelsäuremenge erreicht wird und andererseits die eigentliche Reaktionstemperatur eine bestimmte Höhe nicht überschreitet. Die sich hieraus ergebenden höheren Reaktionstemperaturen beschleunigen die Vorreaktion bis zur Erreichung des gewünschten Teilumsatzes. Diese Arbeitsweise ist aber bei einer wirtschaftlichen Korrosion nur dadurch durchführbar, wenn die Maschine nicht geheizt, sondern gekühlt wird, um die Wandtemperatur gegenüber dem Produkt auf die für eine wirtschaftliche Betriebsdauer annehmbare Korrosion einzustellen, z.B. in einem Temperaturbereich von 70 - 90°C. Bei einer höheren Reaktionstemperatur, z.B. bei 120°C, ergibt sich durch die Apparatekühlung ein Wärmeverlust, der sich aus der Temperaturdifferenz zwischen der Reaktionstemperatur und der Wandtemperatur ergibt. Dieser Wärmeverlust, der für die Reaktion nicht zur Verfügung steht, ist jedoch gegenüber der ganzen zur Verfügung stehenden Reaktionswärme klein und überschreitet kaum 10 %.

Um lokale Ueberhitzungen der Reaktionsmasse durch die Reaktion von Schwefeltrioxyd mit Wasser und damit eine hohe lokale Korrosion zu vermeiden, ist es in manchen Fällen empfehlenswert, die Zugabe von Schwefeltrioxyd mit Wasser auf verschiedene, bei kontinuierlichem Betrieb hintereinandergeschaltete Stellen zu verteilen. Hierbei ist es nicht relevant, ob das Schwefeltrioxyd in Form von Oleum oder in reiner Form zugeführt wird.

Patentansprüche

1. Verfahren zur Durchführung von Prozessen bei höheren Temperaturen in Rührbehältern mit bei diesen Temperaturen stark korrosiven Reaktionskomponenten, dadurch gekennzeichnet, dass die notwendige Reaktionswärme durch Vorheizen der Reaktionskomponenten und/oder eine exotherme Vorreaktion mindestens einer an der Reaktion beteiligten Komponente erzeugt wird, und dass alle mit dem Produkt in Berührung kommenden Flächen des Rührbehälters und Rührwerkes gekühlt werden, um die Korrosionsrate zu verringern.

2. Verfahren nach Patentanspruch 1 zur endothermen Reaktion von Flussspat ($CaF_2$) und Schwefelsäure ($H_2SO_4$) zu Flusssäure (HF) und Gips ($CaSO_4$), dadurch gekennzeichnet, dass in einem ersten gekühlten Apparat ein Teil der Reaktionswärme durch Vorerhitzen der beiden Reaktionskomponenten eingebracht wird, während der Rest der notwendigen Reaktionswärme in einem zweiten Apparat durch beheizte Wände oder mittels Durchleiten von Heizgasen zugeführt wird.

3. Verfahren nach Patentanspruch 1 und Patentanspruch 2, dadurch gekennzeichnet, dass mindestens ein Teil der Reaktionswärme im ersten gekühlten Apparat durch die endotherme Nebenreaktion von Schwefeltrioxyd ($SO_3$) mit Wasser ($H_2O$) zu Schwefelsäure ($H_2SO_4$) entsteht.

4. Verfahren nach Patentanspruch 1, 2 und 3, dadurch gekennzeichnet, dass die Kühlung der mit dem Produkt in Berührung kommenden Flächen nur bis zu der Temperatur erfolgt, bei der die Korrosionsrate eine wirtschaftliche Betriebsdauer gewährleistet.

5. Verfahren nach Patentanspruch 1 bis 4, dadurch gekennzeichnet, dass die Schwefelsäure bzw. Schwefeltrioxyd und Wasser bei kontinuierlich durchgeführter Reaktion auf mehrere Stellen verteilt wird.

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | DE-A-2 435 512 (BAYER) <br> * Seite 1, Zeilen 1-6; Seite 4, Absatz 2; Seite 6, letzter Absatz - Seite 7, Absatz 1; Seite 8, Absatz 3 - Seite 9, Absatz 5; Ansprüche 1,5,6,7 * | 1-3 | B 01 J 19/00 <br> C 01 B 7/19 <br> C 01 F 11/46 |
| | --- | | |
| X | CH-A- 617 641 (H. LIST) <br> * Auszug; Seite 2, Spalte 1, Zeilen 40-49; Seite 2, Spalte 2, Zeilen 28-34 * | 1,2 | |
| | --- | | |
| X | DE-A-1 442 984 (BUSS) <br> * Ansprüche 1,2,4 * | 1,3,5 | |
| | --- | | |
| X | US-A-3 878 294 (W. SCHABACHER et al.) <br> * Auszug; Abbildung; Spalte 5, Zeilen 59-61 * | 1,5 | RECHERCHIERTE SACHGEBIETE (Int. Cl. ³) |
| | --- | | |
| Y | DE-B-1 150 969 (MONTECATINI) <br> * Spalte 1, Zeilen 1-5; Spalte 3, Zeile 46 - Spalte 4, Zeile 3; Spalte 5, Zeilen 3-23; Abbildungen 2,3 * | 1 | B 01 J <br> C 01 B <br> C 23 F |
| | --- | | |
| A | CHEMICAL ENGINEERING PROGRESS, Band 59, Nr. 5, Mai 1963, Seiten 85-88, New York, USA <br> W.R. ROGERS et al.: "Hydrofluoric acid manufacture" * Seite 87, Spalte 3, Punkt 4 * | 1 | |
| | ----- | | |

Der vorliegende Recherchenbericht wurde für alle Patentansprüche erstellt.

| Recherchenort <br> DEN HAAG | Abschlußdatum der Recherche <br> 13-04-1983 | Prüfer <br> SIEM T.D. |
|---|---|---|